# EUROPÄISCHE PATENTANMELDUNG

(11) **EP 0 761 088 A1**
(43) Veröffentlichungstag der Anmeldung: **12.03.1997**
(21) Anmeldenummer: 96202402.2
(22) Anmeldetag: 29.08.1996
(51) Int. Cl.: A01F 25/20, A01K 5/00

(54) **Vorrichtung zum Ausschneiden und/oder Verarbeiten von Viehfutter**

(30) Priorität: 31.08.1995 NL 1001103
(71) Anmelder: Postevendam B.V., 7481 BR Haaksbergen (NL)
(72) Erfinder: Liet, Cornelis Hendricus, 7581 PJ Losser (NL); Kleverkamp, Hermanus Hyacinthus Maria, 8106 AT Marienheem (NL)
(74) Vertreter: de Vries, Johannes Hendrik Fokke

(57) **Zusammenfassung**

Eine Vorrichtung zum Ausschneiden und/oder Verarbeiten von Viehfutter ist mit einer Mischkammer, einem in der Mischkammer (8) bewegbares Mischelement (11) das durch zwei Mitnehmer verbundene, endlose Glieder, wie Ketten (12) oder dergleichen, gebildet wird, versehen. Das Mischelement (11) durchläuft einen die Mischkammer (8) im wesentlichen umgebenden Bahnabschnitt. Weiterhin umfasst die Vorrichtung ein Schneidschild (6) zum Ausschneiden von Viehfutter aus einem Viehfuttervorrat und zum Zuführen des zu mischenden Viehfutters in die Mischkammer (8). Das Mischelement (11) durchläuft an der zum Schneidschild (6) zugekehrten Seite der Mischkammer einen zweiten, ausserhalb der Mischkammer (8) liegenden Bahnabschnitt.

## Beschreibung

Die Erfindung bezieht sich auf eine Vorrichtung zum Ausschneiden und/oder Verarbeiten von Viehfutter mit einer Mischkammer, einem in der Mischkammer bewegbares Mischelement das durch zwei Mitnehmer verbundene, endlose Glieder, wie Ketten oder dergleichen, gebildet wird und das einen die Mischkammer im wesentlichen umgebenden Bahnabschnitt durchläuft, und einem Schneidschild zum Ausschneiden von Viehfutter aus einem Viehfuttervorrat und zum Zuführen des zu mischenden Viehfutters in die Mischkammer.

Eine derartige Vorrichtung ist beschrieben in WO 95/20869 und NL-A-9500544. Bei der bekannten Vorrichtung durchläuft das Mischelement einen die Mischkammer völlig umgebenden Bahn, wobei ein Bahnabschnitt an das Schneidschild grenzt wenn das Schneidschild sich in der Endstellung befindet. Um zu vermeiden dass normalerweise am Schneidschild befestigte Seitenschneidschilder auf das Mischelement stossen, sind die Seitenschneidschilder bei der in der ersterwähnten Druckschrift beschriebenen Vorrichtung an der von der Mischkammer abgekehrten Seite des Schneidschildes angeordnet. Bei der Vorrichtung gemäss der zweiten Druckschrift sind die Seitenschneidmesser drehbar mit dem Schneidschild verbunden. Weiterhin soll bei beiden Vorrichtungen das Mischelement in einer bestimmten Stellung angehalten werden während der Zufuhr des Viehfutters in die Mischkammer und ja eine derartige Stellung, dass die Mitnehmer die Zufuhr des Viehfutters nicht behindern.

Aufgabe der Erfindung ist es eine vereinfachte Vorrichtung der obenerwähnten Art zu verschaffen, wobei eine an sich bekannte Ausführung des Schneidschildes angewandt werden kann, wobei das oder beide feste(n) Seitenschneidmesser zu der Mischkammer hinzugerichtet sind.

Zu diesem Zweck ist die erfindungsgemässe Vorrichtung dadurch gekennzeichnet, dass das Mischelement an der zum Schneidschild zugekehrten Seite der Mischkammer einen zweiten, ausserhalb der Mischkammer liegenden Bahnabschnitt durchläuft.

Dadurch wird in einfacher Weise erreicht, dass das Mischelement an der Seite des Schneidschildes gar keine Behinderung mehr bildet für die Seitenschneidmesser des Schneidschildes und auch nicht für das Zuführen des Viehfutters. Die Mischkammer ist an der Seite des Schneidschildes völlig öffen ausgebildet, so dass keine Massnahmen mehr notwendig sind um das Mischelement in einer bestimmten Stellung anzuhalten. Die erfindungsgemässe Vorrichtung hat dadurch das weitere Vorteil, dass das Mischelement in Betrieb bleiben kann während die Mischkammer mit Viehfutter gefüllt wird. Weiterhin sind keine besonderen Massnahmen mehr notwendig um möglicherweise teilweise unter das Schneidschild in der Endstellung liegendes Viehfutters zu durchschneiden.

Die Erfindung wird im folgenden anhand der Zeichnung, in der zwei Ausführungsbeispiele der erfindungsgemässe Vorrichtung sehr schematisch angedeutet sind, näher erläutert.

Fig. 1 zeigt eine sehr schematisch dargestellte Seitenansicht einer ersten Ausführungsbeispiel der erfindungsgemässen Vorrichtung.

Fig. 2 zeigt eine Fig. 1 entsprechende Seitenansicht einer zweiten Ausführungsbeispiel der erfindungsgemässen Vorrichtung.

Die in der Zeichnung dargestellten Ausführungen der Vorrichtung zum Ausschneiden und/oder Verarbeiten von Viehfutter sind im wesentlichen in der gleichen Weise ausgebildet wie die Vorrichtung gemäss der obenerwähten internationalen Patentanmeldung WO 95/20869, deren Inhalt hier durch Verweisung aufgenommen erachtet werden soll.

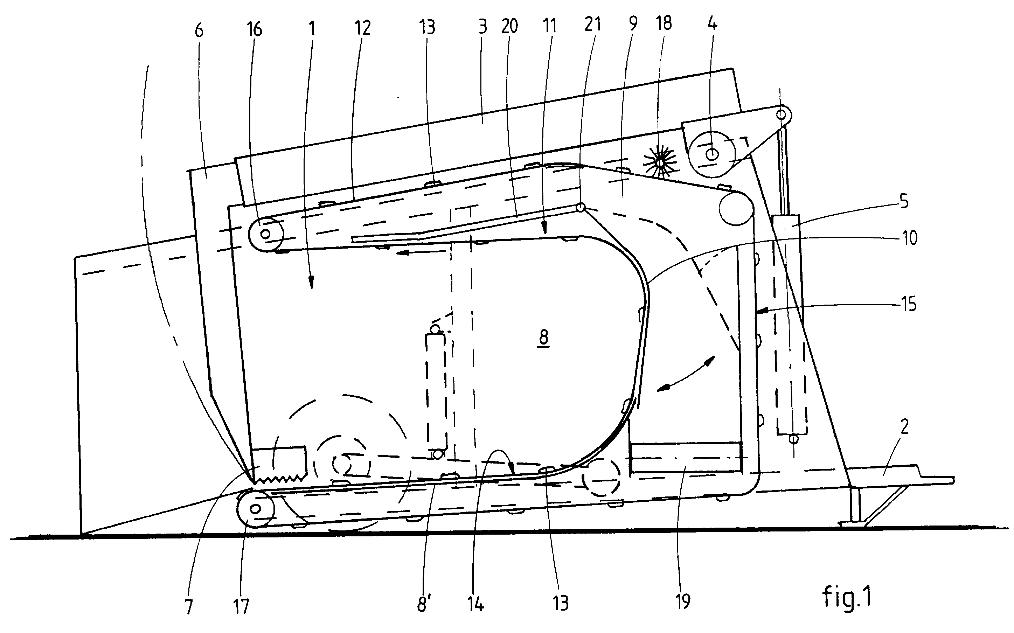

Die Vorrichtung gemäss Fig. 1 enthält im wesentlichen einen Behälter 1 der mittels eines Zugbalkens 2 mit einem nicht-dargestellten Schlepper gekuppelt werden kann. Dabei wird auch eine Kupplung mit der Zapfwelle des Schleppers hergestellt, mittels welcher verschiedene Bewegungsfunktionen der Vorrichtung angetrieben werden. Der Behälter 1 ist mit einem Schwenkarm 3 versehen, der teleskopisch ausgebildet ist und der mittels eines Zylinder-Kolbenaggregats 5 um eine Achse 4 drehbar ist. Am freien Ende trägt der Schwenkarm 3 ein Schneidschild 6, das beim dargestellten Ausführungsbeispiel mit einem oder zwei Seitenschneidmesser(n) 7 ausgebildet ist, von den in der Zeichnung nur ein sichtbar ist. Das Schneidschild 6 ist durch ein- bzw. ausschieben des Schwenkarmes 3 verstellbar zwischen der in der Zeichnung dargestellten Endstellung und einer Schneidstellung, in der das Schneidschild 6 Viehfutter aus einem Vorrat schneiden kann.

Es wird bemerkt, dass auf Wunsch auch ein Schneidschild ohne Seitenschneidmesser angewandt werden kann. Weiterhin ist es möglich ein nicht-teleskopisch ausgebildeter Schwenkarm, mit dem das Schneidschild drehbar verbunden ist, anzuwenden. Unter Schneidschild soll im Rahmen der Erfindung auch ein Schild ohne bewegende Messer verstehen werden.

Der Behälter 1 enthält eine Mischkammer 8, die seitlich durch Seitenwände 9 begrenzt wird, an der zu dem Zugbalken 2 zugekehrten Seite durch eine Abfuhrklappe 10 und an der Hintenseite durch das Schneidschild 6, wenn das Schneidschild sich in der dargestellten Endstellung befindet. Weiterhin hat die Mischkammer 8 einen schematisch dargestellten Boden 8'.

In der Mischkammer 8 ist ein bewegbares Mischelement 11 angeordnet, das bei der dargestellten Ausführung durch zwei endlose Ketten 12 oder dergleichen gebildet wird, von den in der Zeichnung nur eine sichtbar ist und die sich nahe die Seitenwände 9 erstrecken. Zwischen den Ketten 12 sind Mitnehmer 13 angeordnet.

Wie die Zeichnung zeigt, durchläuft das Mischelement 11 einen in der Mischkammer 8 liegenden, ersten Bahnabschnitt 14, der sich nach einander über den Boden, entlang die Abfuhrklappe 10 und entlang die Obenseite der Mischkammer 8 erstreckt. An der Seite des Schneidschildes 6 hingegen durchläuft das Mischelement 11 einen völlig ausserhalb der Mischkammer liegenden, zweiten Bahnabschnitt 15, so dass die Mischkammer an der Seite des Schneidschildes 6 völlig öffen ist. Dadurch bildet das Mischelement 11 gar keine Behinderung für die Zufuhr des Viehfutters in die Mischkammer 8. Überdies kann das Schneidschild 6 in üblicher Weise mit festen Seitenschneidmessern 7, die zu der Mischkammer 8 hinzugerichtet sind, ausgebildet sein.

Der zweite Bahnabschnitt 15 des Mischelementes 11 schliesst über obere Leitrollen 16 und untere Leitrollen 17 an an den in der Mischkammer 8 liegenden ersten Bahnabschnitt 14. Wie Fig. 1 zeigt, läuft der zweite Bahnabschnitt 15 ab die oberen Leitrollen 16 oberhalb der Mischkammer 8 in der Richtung der Achse 4 des Schwenkarmes 3, dann hinunter und entlang die Unterseite der Vorrichtung zu die unteren Leitrollen 17. Die oberen Leitrollen 16 liegen oberhalb und die unteren Leitrollen 17 liegen unterhalb der Mischkammer 8. Es wird klar sein, dass die Ketten 12 des Mischelementes 11 in den beiden Bahnabschnitten 14, 15 weiter durch geeignete Führungen und/oder Leitrollen geführt werden. Die Antriebsrichtung des Mischelementes 11 ist mit einem Pfeil angegeben. Es ist vorteilhaft die Leitrollen 16 als Antriebsrollen auszubilden, da dadurch eine vorteilhafte Belastung der Ketten 12 erreicht wird.

Bei der beschriebenen Vorrichtung ist entlang den zweiten Bahnabschnitt 15 eine Bürste 18 angeordnet zur Reinigung der Mitnehmer 13 und Ketten 12. Die Bürste 18 befindet sich oberhalb eines Querförderers 19, auf dem das gemischte Viehfutter bei geöffneter Abfuhrklappe 10 deponiert wird. Die Bürste 18 kann stillstehend oder rotierend angeordnet sein, wobei im letzten Fall die Umfangsgeschwindigkeit der Bürste vorzugsweise abweicht von der Geschwindigkeit des Mischelementes 11.

Weiterhin ist bei der beschriebenen Vorrichtung ein Führungsglied 20 oberhalb des Obertrumms des ersten Bahnabschnittes 14 des Mischelementes 11 in der Mischkammer 8 angeordnet. Dieses Führungsglied 20 besteht zum Beispiel aus einer Anzahl von nebeneinander angeordneten Stangen oder dergleiche. Das Führungsglied 20 erstreckt sich zwischen dem Drehpunkt 21 der Abfuhrklappe 10 und den oberen Leitrollen 16, wobei der Abstand zwischen dem Führungsglied 20 und dem Obertrumm des Bahnabschnittes 14 des Mischelementes 11 in der Richtung der Leitrollen 16 allmählich abnimmt. Dadurch wird Viehfutter das möglicherweise zwischen den Mitnehmer 13 hindurch auswärts ragt allmählich wieder in die Mischkammer 8 zurückgedrückt.

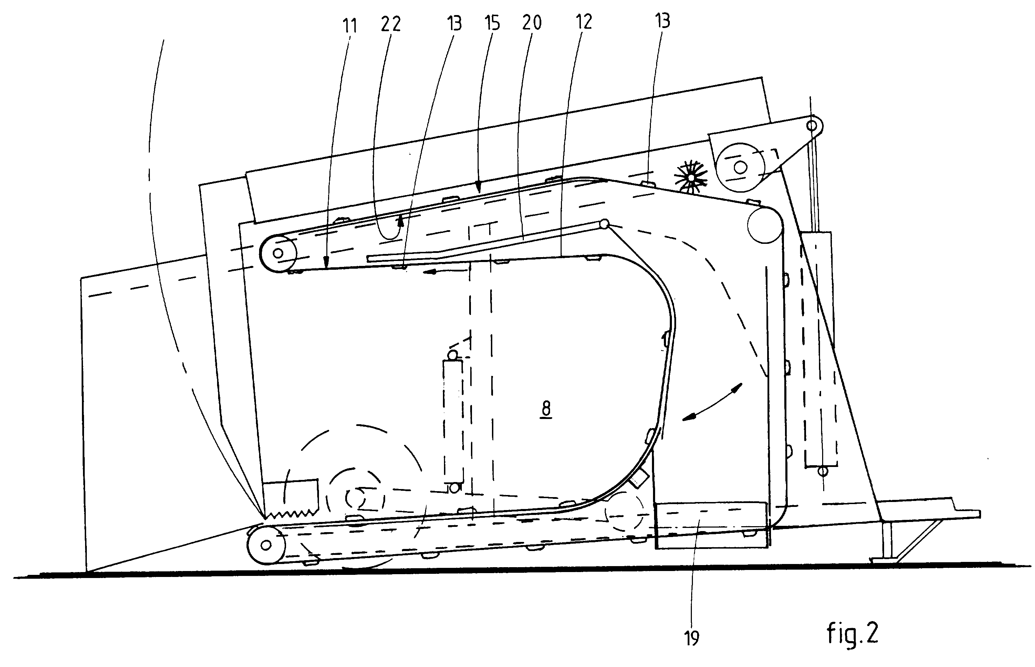

Bei der in Fig. 1 dargestellten Ausführung laufen die Ketten 12 des Mischelementes 11 in dem ausserhalb der Mischkammer 8 liegenden Bahnabschnitt 15 unter dem Querförderer 19 hindurch. In Fig. 2 ist eine alternative Ausführung dargestellt, die im wesentlichen in gleicher Weise ausgebildet ist als die Ausführung gemäss Fig. 1. Entsprechende Teile sind mit gleichen Bezeichnungsziffern angegeben. In diesem Fall sind die Ketten 12 des Mischelementes 11 zwischen dem Obertrumm und dem Untertrumm des Querförderers 19 hindurch geführt, wodurch der Querförderer 19 niedriger in der Vorrichtung angeordnet werden kann, während das Mischelement 11 ausreichend von den Boden entfernt ist.

Weiterhin ist bei der in Fig. 2 dargestellten Vorrichtung eine zusätzliche Abschirmplatte 22 angeordnet unter dem Teil des zweiten Bahnabschnittes 15, der sich gerade oberhalb der Mischkammer 8 befindet. Dadurch wird vermieden, dass durch die Mitnehmer 13 mitgenommenes Viehfutter zwischen den sich in dem Bahnabschnitt 15 befindenden Mitnehmer 13 kommen kann. Auf Wünsch kann bei Anwendung dieser Abschirmplatte 22 das Führungsglied 20 weggelassen werden.

Die Erfindung beschränkt sich nicht auf die im vorgehenden beschriebenen Ausführungsbeispiele, die im Rahmen der Ansprüche vielfältig variert werden können.

## Patentansprüche

1. Vorrichtung zum Ausschneiden und/oder Verarbeiten von Viehfutter mit einer Mischkammer, einem in der Mischkammer bewegbares Mischelement das durch zwei Mitnehmer verbundene, endlose Glieder, wie Ketten oder dergleichen, gebildet wird und das einen die Mischkammer im wesentlichen umgebenden Bahnabschnitt durchläuft, und einem Schneidschild zum Ausschneiden von Viehfutter aus einem Viehfuttervorrat und zum Zuführen des zu mischenden Viehfutters in die Mischkammer, **dadurch gekennzeichnet**, dass das Mischelement an der zum Schneidschild zugekehrten Seite der Mischkammer einen zweiten, ausserhalb der Mischkammer liegenden Bahnabschnitt durchläuft.

2. Vorrichtung gemäss Anspruch 1, **dadurch gekennzeichnet**, dass der zweite Bahnabschnitt des Mischelementes beidseitig der Mischkammer über zwei Leitrollen an den, die Mischkammer teilweise umgebenden Bahnabschnitt anschliesst, welche Leitrolle unterhalb bzw. überhalb der Mischkammer angeordnet sind.

3. Vorrichtung gemäss Anspruch 1 oder 2, **dadurch gekennzeichnet**, dass ein Reinigungselement, zum Beispiel eine Bürste, entlang den zweiten Bahnabschnitt des Mischelementes angeordnet ist.

4. Vorrichtung gemäss einem der vorgehenden Ansprüche, wobei die Mischkammer an der gegenüber dem Schneidschild liegenden Seite mit einer auf einen Querförderer mündenden Abfuhrkappe versehen ist, **dadurch gekennzeichnet**, dass oberhalb des Obertrumms des ersten Bahnabschnittes des Mischelementes ein Führungsglied angeordnet ist, das sich etwa zwischen der Abfuhrkappe und den oberen Leitrollen erstreckt, wobei der Abstand zwischen dem Führungsglied und dem Obertrumm des ersten Bahnabschnitt des Mischelementes ab der Abfuhrkappe in der Richtung von den oberen Leitrollen allmählich abnimmt.

5. Vorrichtung gemäss Anspruch 3 und 4, **dadurch gekennzeichnet**, dass das Reinigungselement oberhalb des Querförderers angeordnet ist.

6. Vorrichtung gemäss einen der vorgehenden Ansprüche, wobei die Mischkammer an der gegenüber dem Schneidschild liegenden Seite mit einer auf einen Querförderer mündenden Abfuhrkappe versehen ist, **dadurch gekennzeichnet**, dass der zweite Bahnabschnitt des Mischelementes unter dem Querförderer hindurch lauft.

7. Vorrichtung gemäss dem Oberbegriff des Anspruchs 6, **dadurch gekennzeichnet**, dass der zweite Bahnabschnitt zwischen dem Ober- und Untertrumm des Querförderers hindurch läuft.

8. Vorrichtung gemäss einem der vorhergehenden Ansprüche, **dadurch gekennzeichnet**, dass der zweite Bahnabschnitt des Mischelementes sich für einen Teil oberhalb des ersten Bahnabschnittes erstreckt, wobei in diesem Teil eine Abschirmplatte zwischen den beiden Bahnabschnitten angeordnet ist, vorzugsweise grenzend an diesen Teil des zweiten Bahnabschnittes.

9. Vorrichtung gemäss einem der Ansprüche 2-8, **dadurch gekennzeichnet**, dass die oberen Leitrollen als Antriebsrollen des Mischelementes ausgebildet sind, welche Antriebsrollen eine Zugkraft auf das Mischelement im ersten Bahnabschnitt ausüben.
